# EUROPEAN PATENT SPECIFICATION

(11) **EP 2 657 935 B1**
(45) Date of publication and mention of the grant of the patent: **21.09.2016**
(21) Application number: 13165185.3
(22) Date of filing: 24.04.2013
(51) Int. Cl.: G11B 5/31, G11B 5/00, G11B 5/60

(54) **Near field transducers including nitride materials**
Nahfeldwandler mit Nitridmaterialien
Transducteurs de champ proche comprenant des matériaux de nitrure

(30) Priority: 24.04.2012 US 201261637696 P
(43) Date of publication of application: 30.10.2013
(73) Proprietor: Seagate Technology LLC, Cupertino CA 95014 (US)
(72) Inventor: Zhao, Tong, Eden Prairie, Minnesota 55344 (US); Sahoo, Sarbeswar, Shakopee, Minnesota 55379 (US); Kautzky, Michael Christopher, Eagan, Minnesota 55122 (US); Itagi, Amit Vasant, Hugo, Minnesota 55038 (US)
(74) Representative: Miller Sturt Kenyon

(56) References cited:
- US-A1- 2011 205 863
- US-A1- 2012 045 662

## Description

### BACKGROUND

In heat assisted magnetic recording, information bits are recorded on a data storage medium at elevated temperatures, and the data bit dimension can be determined by the dimensions of the heated area in the storage medium or the dimensions of an area of the storage medium that is subjected to a magnetic field. In one approach, a beam of light is condensed to a small optical spot on the storage medium to heat a portion of the medium and reduce the magnetic coercivity of the heated portion. Data is then written to the reduced coercivity region.

One example of a recording head for use in heat assisted magnetic recording includes a near field transducer (NFT) that is capable of focusing light to a spot size smaller than the diffraction limit. The NFT is designed to reach local surface-plasmon resonance at a designed light wavelength. At resonance, a high electric field surrounding the NFT appears, due to the collective oscillation of electrons in the metal. A portion of the field will tunnel into a storage medium and get absorbed, raising the temperature of the medium locally for recording.

The NFT's temperature significantly increases at plasmonic resonance. In addition, a portion of the NFT may be exposed at the air bearing surface of the recording head and is thus subject to mechanical wearing. NFT performance is greatly influenced by the heat and mechanical stress during HAMR operation. Gold (Au) is currently used as the primary NFT material due to its superior optical properties. However, gold has a relatively low mechanical strength and gold NFTs may experience reflow at elevated temperatures resulting in rounding of the NFT shape. A deformation in shape can reduce coupling efficiency and reduce the amount of light energy transferred to the storage medium. Therefore, there remains a need for NFTs made of materials other than gold.

US 2011/205863 discloses a near field transducer including gold and at least one dopant. The dopant can include at least one of: Cu, Rh, Ru, Ag, Ta, Cr, Al, Zr, V, Pd, Ir, Co, W, Ti, Mg, Fe, or Mo. The dopant concentration may be in a range from 0.5% and 30%. The dopant can be a nanoparticle oxide of V, Zr, Mg, Ca, Al, Ti, Si, Ce, Y, Ta, W, or Th, or a nitride of Ta, Al, Ti, Si, In, Fe, Zr, Cu, W or B.

US 2012/045662 discloses an apparatus including a near field transducer positioned adjacent to an air bearing surface, a first magnetic pole, a heat sink positioned between the first magnetic pole and the near field transducer, and a diffusion barrier positioned between the near field transducer and the first magnetic pole. The diffusion barrier can be positioned adjacent to the magnetic pole or the near field transducer.

### SUMMARY

According to the invention, there is provided an apparatus as defined in claim 1.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### BRIEF DESCRIPTION OF THE FIGURES

**FIG. 1** is a pictorial representation of a data storage device in the form of a disc drive that can include a recording head constructed in accordance with an aspect of this disclosure.
**FIG. 2** is a side elevation view of a recording head constructed in accordance with an aspect of the invention.
**FIG. 3** is a schematic representation of a near field transducer.
**FIG. 4** is a schematic representation of another near field transducer.
**FIG. 5A** depicts a schematic of a cross section of a disclosed NFT.
**FIGs. 5B** and **5C** are an atomic force microscopy (AFM) image and a tunneling electron microscope (TEM) image of a previously utilized NFT that shows corner rounding.
**FIG. 6** depicts a schematic of a cross section of another disclosed NFT provided as background art only.
**FIGs. 7A** and **7B** are schematic representations of cross sections of another disclosed near field transducer. FIG. 7B is provided as background art only.
**FIG. 8** shows a top down view of a disclosed exemplary device.
**FIG. 9** shows the optical intensity in the media recording layer using a disclosed device.

The figures are not necessarily to scale. Like numbers used in the figures refer to like components. However, it will be understood that the use of a number to refer to a component in a given figure is not intended to limit the component in another figure labeled with the same number.

### DETAILED DESCRIPTION

In the following description, reference is made to the accompanying set of drawings that form a part hereof and in which are shown by way of illustration several specific embodiments. It is to be understood that other embodiments are contemplated and may be made without departing from the scope of the present disclosure. The following detailed description, therefore, is not to be taken in a limiting sense.

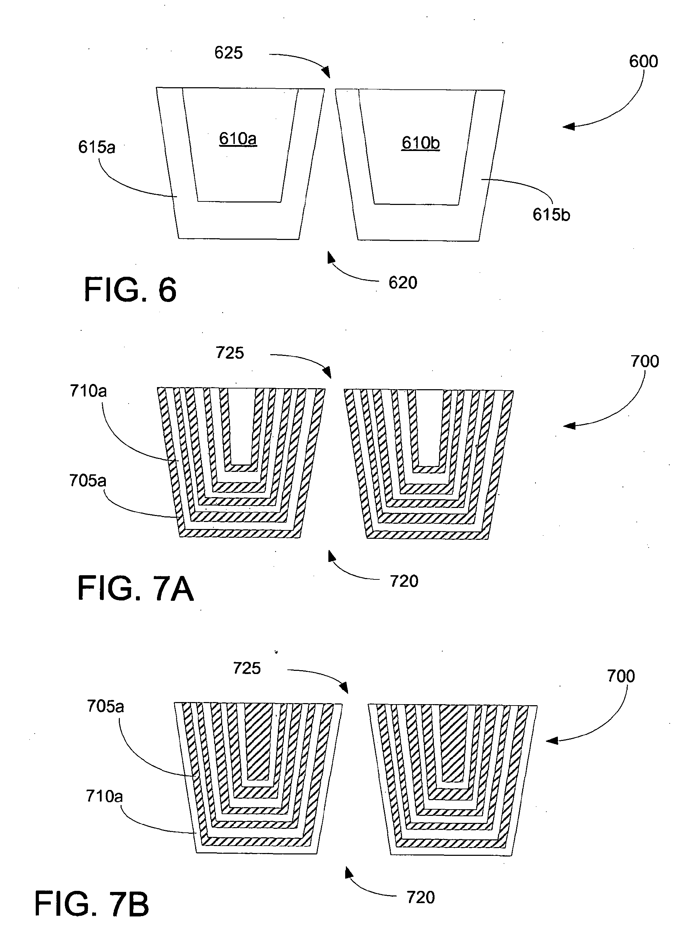

The example NFTs shown in FIGs. 6 and 7B described below are provided as background art only and do not form part of the claimed invention.

The recitation of numerical ranges by endpoints includes all numbers subsumed within that range (e.g. 1 to 5 includes 1, 1.5, 2, 2.75, 3, 3.80, 4, and 5) and any range within that range.

As used in this specification and the appended claims, the singular forms "a", "an", and "the" encompass embodiments having plural referents, unless the content clearly dictates otherwise. As used in this specification and the appended claims, the term "or" is generally employed in its sense including "and/or" unless the content clearly dictates otherwise.

"Include," "including," or like terms means encompassing but not limited to, that is, including and not exclusive. It should be noted that "top" and "bottom" (or other terms like "upper" and "lower") are utilized strictly for relative descriptions and do not imply any overall orientation of the article in which the described element is located.

In one aspect, this disclosure provides a near field transducer (NFT) that can be used in a HAMR recording head. Disclosed NFTs include materials that may show advantageous mechanical properties as well as decreased thermal mismatch with adjacent materials, while still possessing acceptable optical properties. In several examples, such materials include nitrides.

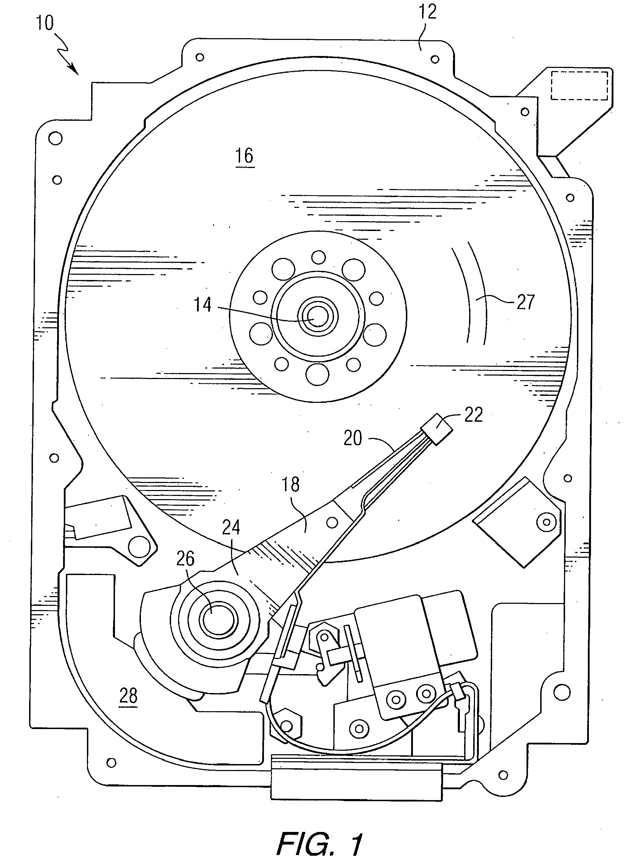

Disclosed herein are NFTs and devices that include such NFTs. **FIG. 1** is a pictorial representation of a data storage device in the form of a disc drive 10 that can utilize disclosed NFTs. The disc drive 10 includes a housing 12 (with the upper portion removed and the lower portion visible in this view) sized and configured to contain the various components of the disc drive. The disc drive 10 includes a spindle motor 14 for rotating at least one magnetic storage media 16 within the housing. At least one arm 18 is contained within the housing 12, with each arm 18 having a first end 20 with a recording head or slider 22, and a second end 24 pivotally mounted on a shaft by a bearing 26. An actuator motor 28 is located at the arm's second end 24 for pivoting the arm 18 to position the recording head 22 over a desired sector or track 27 of the disc 16. The actuator motor 28 is regulated by a controller, which is not shown in this view and is well-known in the art. The storage media may include, for example, continuous media or bit patterned media.

For heat assisted magnetic recording (HAMR), electromagnetic radiation, for example, visible, infrared or ultraviolet light is directed onto a surface of the data storage media to raise the temperature of a localized area of the media to facilitate switching of the magnetization of the area. Recent designs of HAMR recording heads include a thin film waveguide on a slider to guide light toward the storage media and a near field transducer to focus the light to a spot size smaller than the diffraction limit. While **FIG. 1** shows a disc drive, disclosed NFTs can be utilized in other devices that include a near field transducer.

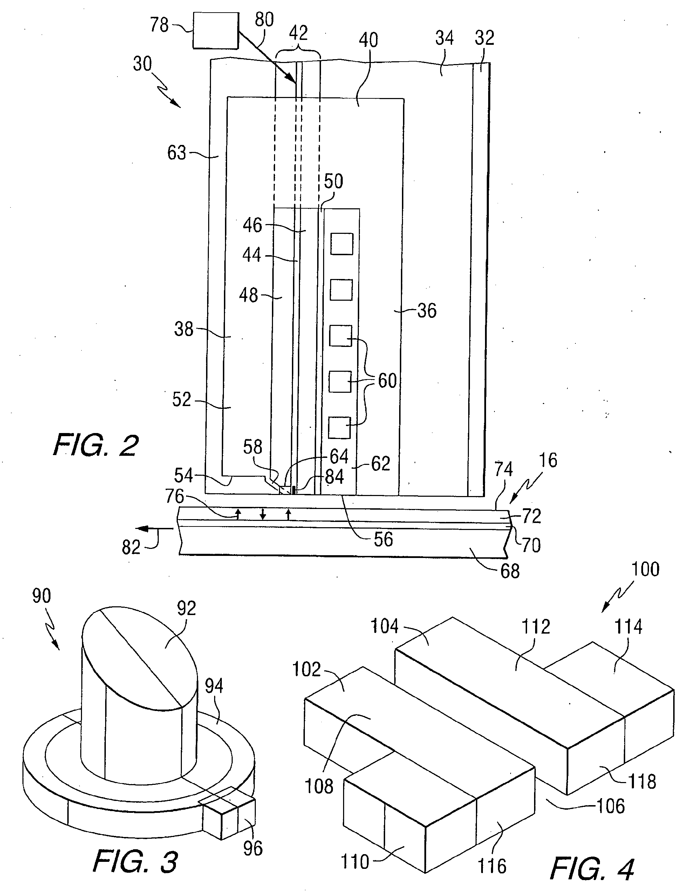

**FIG. 2** is a side elevation view of a recording head that may include a disclosed NFT; the recording head is positioned near a storage media. The recording head 30 includes a substrate 32, a base coat 34 on the substrate, a bottom pole 36 on the base coat, and a top pole 38 that is magnetically coupled to the bottom pole through a yoke or pedestal 40. A waveguide 42 is positioned between the top and bottom poles. The waveguide includes a core layer 44 and cladding layers 46 and 48 on opposite sides of the core layer. A mirror 50 is positioned adjacent to one of the cladding layers. The top pole is a two-piece pole that includes a first portion, or pole body 52, having a first end 54 that is spaced from the air bearing surface 56, and a second portion, or sloped pole piece 58, extending from the first portion and tilted in a direction toward the bottom pole. The second portion is structured to include an end adjacent to the air bearing surface 56 of the recording head, with the end being closer to the waveguide than the first portion of the top pole. A planar coil 60 also extends between the top and bottom poles and around the pedestal. In this example, the top pole serves as a write pole and the bottom pole serves as a return pole.

An insulating material 62 separates the coil turns. In one example, the substrate can be AlTiC, the core layer can be Ta₂O₅, and the cladding layers (and other insulating layers) can be Al₂O₃. A top layer of insulating material 63 can be formed on the top pole. A heat sink 64 is positioned adjacent to the sloped pole piece 58. The heat sink can be comprised of a non-magnetic material, such as for example Au.

As illustrated in **FIG. 2****,** the recording head 30 includes a structure for heating the magnetic storage media 16 proximate to where the write pole 58 applies the magnetic write field H to the storage media 1.6. In this example, the media 16 includes a substrate 68, a heat sink layer 70, a magnetic recording layer 72, and a protective layer 74. However, other types of media, such as bit patterned media can be used. A magnetic field H produced by current in the coil 60 is used to control the direction of magnetization of bits 76 in the recording layer of the media.

The storage media 16 is positioned adjacent to or under the recording head 30. The waveguide 42 conducts light from an energy source 78 of electromagnetic radiation, which may be, for example, ultraviolet, infrared, or visible light. The source may be, for example, a laser diode, or other suitable laser light source for directing a light beam 80 toward the waveguide 42. Specific exemplary types of energy sources 78 can include, for example laser diodes, light emitting diodes (LEDs), edge emitting laser diodes (EELs), vertical cavity surface emitting lasers (VCSELs), and surface emitting diodes. In some embodiments, the energy source can produced energy having a wavelength from 300 nm to 2000 nm. In some embodiments, the energy source can produce energy having a wavelength of 830 nm, for example. Various techniques that are known for coupling the light beam 80 into the waveguide 42 may be used. Once the light beam 80 is coupled into the waveguide 42, the light propagates through the waveguide 42 toward a truncated end of the waveguide 42 that is formed adjacent the air bearing surface (ABS) of the recording head 30. Light exits the end of the waveguide and heats a portion of the media, as the media moves relative to the recording head as shown by arrow 82. A near-field transducer (NFT) 84 is positioned in or adjacent to the waveguide and at or near the air bearing surface. The heat sink material may be chosen such that it does not interfere with the resonance of the NFT.

Although the example of **FIG. 2** shows a perpendicular magnetic recording head and a perpendicular magnetic storage media, it will be appreciated that the disclosure may also be used in conjunction with other types of recording heads and/or storage media where it may be desirable to concentrate light to a small spot.

FIG. 3 is a schematic view of a lollypop NFT 90 in combination with a heat sink 92. The NFT includes a disk shaped portion 94 and a peg 96 extending from the disk shaped portion. The heat sink 92 can be positioned between the disk shaped portion and the sloped portion of the top pole in **FIG. 2****.** When mounted in a recording head, the peg may be exposed at the ABS and thus can be subjected to mechanical wearing.

**FIG. 4** is a schematic view of a coupled nanorod (CNR) NFT 100. This NFT includes two nanorods 102 and 104 separated by a gap 106. Nanorod 102 includes a first portion 108 and a second portion 110. Nanorod 104 includes a first portion 112 and a second portion 114. When mounted in a recording head, the ends 116 and 118 of the nanorods may be exposed at the ABS and thus be subject to mechanical wearing.

**FIGs. 3** and **4** show example NFTs. However, the disclosure is not limited to any particular type of NFT. The materials described below may be used in various NFT configurations. When used in a recording head, NFTs may have an end positioned at or near the air bearing surface.

Materials that are to be used in disclosed NFTs generally are plasmonic materials. The plasmonic nature of a material can be estimated based on the refractive index (n) and the extinction coefficient (k). Table I shows optical properties (n and k), thermal conductivity and coefficient of thermal expansion (CTE) for various materials. Table I also provides a figure of merit (FOM) for surface plasmon generation ((n²-k²)/2nk).

**Table I: Optical Properties of Various Materials**

| Material | n @ 830 nm | k @ 830nm | FOM (n²-k²)/2nk |
|---|---|---|---|
| Ag | 0.15 | 5.52 | -18.39 |
| Au | 0.19 | 5.42 | -14.25 |
| Cu | 0.26 | 5.29 | -10.15 |
| TiN | 0.99 | 3.60 | -1.68 |
| ZrN | 0.88 | 4.55 | -2.50 |
| Ta | 1.09 | 3.75 | -1.57 |
| Al | 2.72 | 8.29 | -1.36 |
| Rh | 2.78 | 6.97 | -1.05 |
| Pd | 2.09 | 5.22 | -1.05 |
| Ir | 2.65 | 5.39 | -0.77 |
| Co | 2.54 | 4.91 | -0.71 |
| Pt | 2.93 | 5.08 | -0.58 |
| Fe | 2.94 | 3.41 | -0.15 |
| Ti | 2.99 | 3.32 | -0.10 |
| Mo | 3.53 | 3.30 | 0.07 |
| V | 3.47 | 3.18 | 0.09 |
| W | 3.48 | 2.79 | 0.22 |
| Ru | 4.98 | 3.88 | 0.25 |

As seen from Table 1, the currently measured properties for ZrN and TiN are only lower than those of Ag, Au, and Cu, and are therefore favorable candidates among all alternative plasmonic materials considered. Furthermore, the deposition processes of ZrN and TiN can be affected in order to improve the optical properties. Table II below shows nanoindentation hardness and coefficient of thermal expansion (CTE) of various materials.

**Table II: Hardness and CTE of Various Materials**

| Material | Nanoindentation Hardness (GPa) | Coefficient of Thermal Expansion (x 10⁻⁶/K) |
|---|---|---|
| AlO | - | 5 |
| SiO₂ | - | 3 |
| TaO | - | 6 |
| Au | ∼2 | 14.2 |
| TiN | 18-21 | 9.35 |
| ZrN | 20-40 | 9.4 |

As seen from Table II, the nanoindentation hardness of ZrN is 20-40 GPa and that of Tin is 18-21 GPa. These values are an order of magnitude higher than that of Au (around 2 GPa). Furthermore, the CTE of ZrN (9.4 x 10⁻⁶/K) and TiN (9.35 x 10⁻⁶/K) are about 40% lower than that of Au and are closer to the oxide waveguide materials that surround the NFT. This could lead to lesser thermal stresses during HAMR operation.

Disclosed herein are NFTs that include an electrically conductive nitride material. Exemplary electrically conductive nitride materials can include, for example, ZrN, TiN, TaN, HfN, or combinations thereof. In some embodiments NFTs can include ZrN, TiN, or combinations thereof.

In some embodiments, the entire NFT can be made of a nitride material. In some embodiments, the entire NFT can be made of ZrN, TiN, or some combination thereof. In some embodiments, the NFT could be a lollypop type design, a nanorod type design, or any other type of NFT design. In some embodiments, a lollypop type NFT can be made entirely of a nitride material. In some embodiments, a nanorod type NFT can be made entirely of a nitride material.

In some embodiments, only a part of a NFT is made of a nitride material. In some embodiments, such a NFT could be a lollypop type design, a nanorod type design, or any other type of NFT design. In some embodiments, only the peg (see peg 96 in **FIG. 3**) of a NFT can be made of a nitride material and the remainder of the NFT (i.e., the disk shaped portion 94 in **FIG. 3**) can be made of a different material, for example, gold, silver, copper, or alloys thereof. Such an embodiment could improve the reliability of the NFT at the ABS due to superior thermo-mechanical properties of the nitride material over gold. Although there may be some coupling efficiency loss, the loss may be low and within an acceptable range due to the large disc surface area or volume which would still be gold.

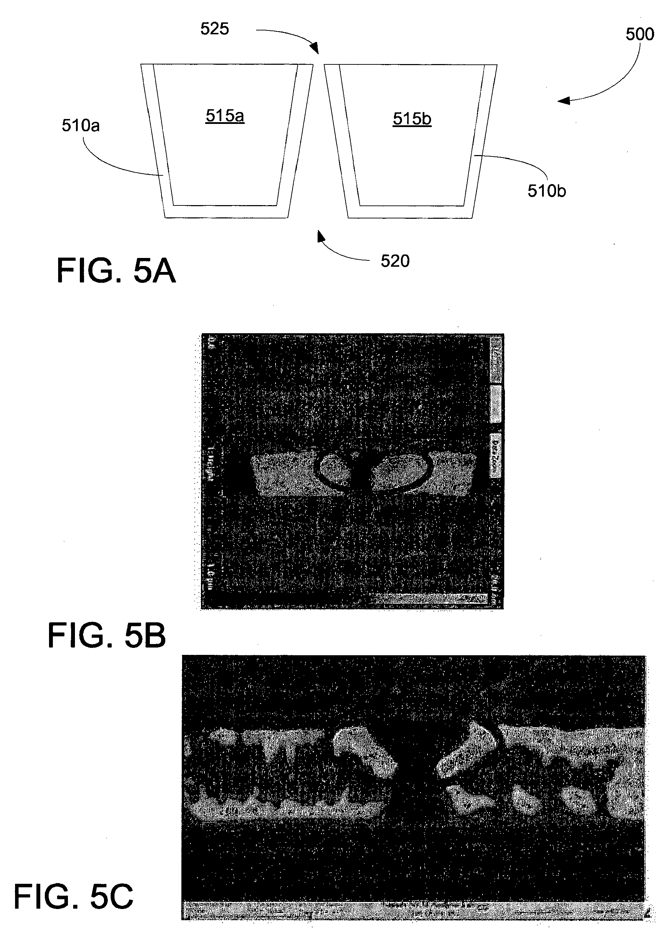

In some embodiments, only one or more portions of a NFT is made of a nitride material. An example of an NFT that could have one or more portions thereof made of a nitride material can include embodiments such as that depicted in **FIG. 5A**. The NFT 500 in **FIG. 5A** is a nanorod type NFT where each of the rods includes a nitride base layer 510a and 510b on the bottom 520 (opposite the top 525 of the NFT) of the individual rods of the NFT and a non-nitride core 515a and 515b. In some embodiments, the non-nitride cores 515a and 515b can be, for example, gold, silver, copper, or alloys thereof. In some embodiments, the nitride base layer 510a and 510b can have a thickness that is at least 5 Å. In some embodiments, the nitride base layer 510a and 510b can have a thickness that is from 1 Å to 20 Å.

NFTs that include such nitride base layers can enhance mechanical properties of NFTs without significantly sacrificing the coupling efficiency. In some embodiments, such nitride base layers could function to reduce, minimize or eliminate corner rounding issues that have been seen in (for example) gold nanorod type NFTs. **FIGs**. **5B** and **5C** show atomic force microscopy (AFM) and tunneling electron microscope (TEM) images of gold nanorod type NFTs that show corner rounding. The location of the corner rounding appears to correlate with the location of the highest stress points at the corners of the rods (the gold/dielectric interface), as predicted by thermo-mechanical modeling. Embodiments such as that depicted in **FIG. 5A** may mitigate the corner rounding problem and should have reduced coupling efficiency penalties due to the relatively small amount of nitride material present in the overall NFT.

Another example of a NFT that could have one or more portions thereof made of a nitride material is depicted as background art only in **FIG. 6****.** The NFT 600 in **FIG. 6** is a nanorod type NFT where each of the rods includes a non-nitride base layer 615a and 615b on the bottom 620 (opposite the top 625 of the NFT) of the individual rods of the NFT and a nitride core 610a and 610b. The non-nitride base layers 615a and 615b can be, for example, gold, silver, copper, or alloys thereof. The non-nitride base layers 615a and 615b can have a thickness of at least 50 nm. The non-nitride base layers 615a and 615b can have a thickness that is from 1 Å to 100 Å. This NFT may provide advantages because it is thought that the bottom of the rods of the NFT are the plasmonically active portion of the NFT, and therefore having that region made of relatively more effective plasmonic materials (gold, silver, copper, or alloys thereof) can provide a NFT which has a very high coupling efficiency. Filling the rods (i.e., the nitride cores 610a and 610b) with a nitride material, which has a low CTE and low modulus could offer thermo-mechanical advantages. Such a NFT could offer both higher coupling efficiency and better thermo-mechanical properties.

Other examples of NFTs that have one or more portions thereof made of a nitride material are depicted in **FIGs. 7A** and **7B****.** The NFT 700 depicted in **FIG. 7A** is a nanorod type NFT where each rod includes a multilayer structure of alternating nitride and non-nitride layers. The embodiment depicted in **FIG. 7A** includes alternating layers of nitride layers 705a and non-nitride layers 710a. In this embodiment, the nitride layers are the first layer on the bottom 720 (opposite the top 725 of the NFT) of the individual rods of the NFT.

The example depicted as background art only in **FIG. 7B** also includes alternating layers of non-nitride layers 710a and nitride layers 705a. In this example, the non-nitride layers are the first layer on the bottom 720 of the individual rods of the NFT.

In the embodiment depicted in **FIG. 7A****,** the non-nitride layers 710a can be, for example, gold, silver, copper, or alloys thereof. In some embodiments, there can be from 1 to 3000 sets of alternating layers of nitride and non-nitride materials. In some embodiments, there can be from 1 to 1000 sets of alternating layers of nitride and non-nitride materials. The individual layers in the NFT may, but need not, have the same thicknesses. Furthermore, any individual layer can have different thicknesses at different points, for example, the region along the bottom of a layer could be a different thickness than the regions along a side or sides of the NFT. In some embodiments, the individual layers can have thicknesses from 1 Å to 1000 Å. In some embodiments, the individual layers can have thicknesses from 1 Å to 100 Å. Such embodiments may offer a way of maximizing coupling efficiency and thermo-mechanical properties.

### EXAMPLES

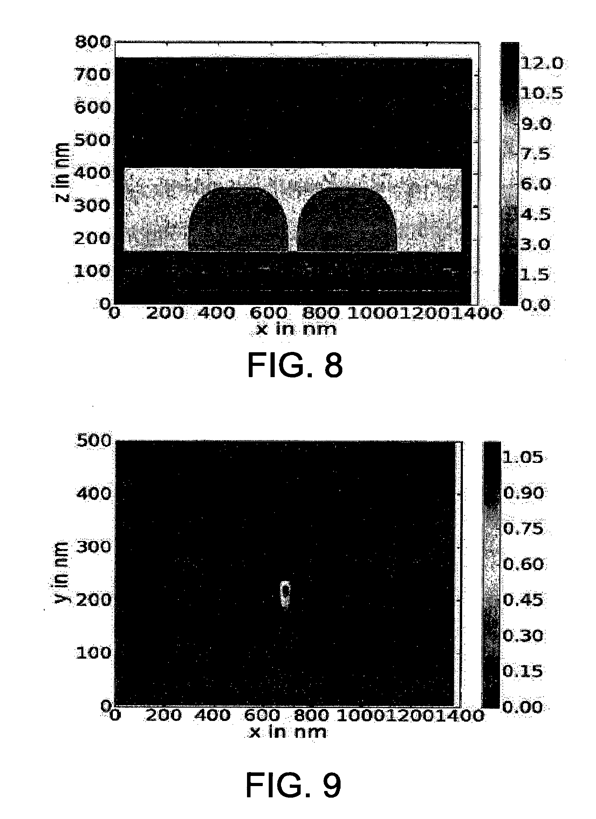

A nanorod type NFT made entirely of TiN was modeled. The dimensions of the NFT (cross-track width and z height) were chosen with the properties of TiN in mind. **FIG. 8** shows a top view of such a device, with the two half circles being the NFT regions. The optical intensity in the media recording layer is shown in **FIG. 9****.** Modeling showed that the coupling efficiency for this design was approximately 30% that of a gold nanorod type NFT (CE=3.85% for Au and CE=1.10% for TiN). However, the acceptability of a NFT design is not entirely based on coupling efficiency; the superior thermo-mechanical properties of the TiN nanorod type NFT could be very beneficial. Similar results would be expected for a ZrN nanorod type NFT.

Growth of stoichiometric, crystalline, and low resistivity metallic TiN or ZrN has required high temperature processing in the past, for example up to about 800° C using physical vapor deposition (PVD) methods such as direct current (DC) or reactive magnetron sputtering. Low resistivity TiN films have been produced at temperatures as low as about 200° C by highly ionized sputter deposition techniques such as High Power Impulse Magnetron Sputtering (HiPIMS) power sources. TiN films having resistivity as low as 41.9 µΩ-cm have been obtained. Laser ablation deposition techniques have also been used to produce TiN and ZrN films at temperatures ranging from about 100° C to about 600° C.

Thus, embodiments of near field transducers including nitride materials are disclosed. The scope of the present invention is defined by the claims.

## Claims

1. An apparatus comprising:
a near field transducer (90, 100), **characterized in that** a plasmonically active part (510a, 510b) of the near field transducer (90, 100) consists essentially of an electrically conductive nitride.

2. The apparatus according to claim 1, wherein the near field transducer (90, 100) comprises TiN, ZrN, TaN, HfN, or combinations thereof.

3. The apparatus according to claim 1, wherein the entire near field transducer (90, 100) comprises the electrically conductive nitride.

4. The apparatus according to claim 3, wherein the near field transducer (90, 100) consists essentially entirely of an electrically conductive nitride.

5. The apparatus according to any one of the preceding claims, wherein the entire near field transducer (90, 100) consists essentially of TiN, ZrN TaN, HfN, or combinations thereof.

6. The apparatus according to any one of the preceding claims further comprising an energy source (78), the energy source (78) producing energy having a wavelength from 300 nm to 2000 nm.

7. The apparatus according to claim 1 or claim 2, wherein the near field transducer (90, 100) has a peg (96) and disc (94) structure and only the peg (96) comprises the electrically conductive nitride.

8. The apparatus according to claim 7, wherein the disc (94) of the near field transducer (90, 100) comprises gold.

9. The apparatus according to claim 1 or claim 2, wherein only portions of the near field transducer (500) comprise the electrically conductive nitride.

10. The apparatus according to claim 9, wherein the near field transducer (90, 100) comprises at least one layer of the electrically conductive nitride material.

11. The apparatus according to claim 10, wherein the at least one layer is on the bottom of the near field transducer (90, 100).

12. The apparatus according to claim 10, wherein the near field transducer (90, 100) comprises a multilayer structure of the electrically conductive nitride and another plasmonic, non-nitride material.

13. The apparatus according to any one of claims 1 to 6, wherein the electrically conductive nitride is dispersed throughout the near field transducer (90, 100).

14. The apparatus according to claim 13, wherein another plasmonic, non-nitride material is a dopant in the electrically conductive nitride material.

15. The apparatus according to any one of the preceding claims, wherein the near field transducer (90, 100) comprises TiN, ZrN, TaN, HfN, or combinations thereof; and a non-nitride material selected from Au, Ag, Cu, or alloys thereof.

16. An apparatus according to any one of the preceding claims further comprising:
an energy source (78); and
a waveguide (42);
wherein the energy source (78), waveguide (42) and near field transducer (90, 100) are configured to transmit light from the energy source (78) to the waveguide (42) and finally the near field transducer (90, 100).

17. An apparatus according to any one of claims 1 to 15, said apparatus being a disc drive (10) and further comprising:
at least one actuator arm (48) having a first end and a second end; and
at least one head (22), wherein each arm has a head at the first end thereof and wherein each head comprises:
an energy source (78);
the near field transducer (90, 100);
a magnetic reader; and
a magnetic writer (58),
wherein the energy source (78) and the near field transducer (90, 100) are configured to transmit light from the energy source (78) to the near field transducer (90, 100) in order to assist the magnetic writer (58) with writing.

## Patentansprüche

1. Vorrichtung, die Folgendes umfasst:
einen Nahfeldwandler (90, 100), **dadurch gekennzeichnet, dass** ein plasmonisch aktiver Teil (510a, 510b) des Nahfeldwandlers (90, 100) im Wesentlichen aus einem elektrisch leitfähigen Nitrid besteht.

2. Vorrichtung nach Anspruch 1, wobei der Nahfeldwandler (90, 100) TiN, ZrN, TaN, HfN oder Kombinationen davon umfasst.

3. Vorrichtung nach Anspruch 1, wobei der gesamte Nahfeldwandler (90, 100) das elektrisch leitfähige Nitrid umfasst.

4. Vorrichtung nach Anspruch 3, wobei der Nahfeldwandler (90, 100) im Wesentlichen vollständig aus einem elektrisch leitfähigen Nitrid besteht.

5. Vorrichtung nach einem der vorangehenden Ansprüche, wobei der gesamte Nahfeldwandler (90, 100) im Wesentlichen aus TiN, ZrN TaN, HfN oder Kombinationen davon besteht.

6. Vorrichtung nach einem der vorangehenden Ansprüche, die des Weiteren eine Energiequelle (78) umfasst, wobei die Energiequelle (78) Energie erzeugt, die eine Wellenlänge von 300 nm bis 2000 nm aufweist.

7. Vorrichtung nach Anspruch 1 oder 2, wobei der Nahfeldwandler (90, 100) eine Nase (96)-und-Scheibe (94)-Struktur hat und nur die Nase (96) das elektrisch leitfähige Nitrid umfasst.

8. Vorrichtung nach Anspruch 7, wobei die Scheibe (94) des Nahfeldwandlers (90, 100) Gold umfasst.

9. Vorrichtung nach Anspruch 1 oder 2, wobei nur Abschnitte des Nahfeldwandlers (500) das elektrisch leitfähige Nitrid umfassen.

10. Vorrichtung nach Anspruch 9, wobei der Nahfeldwandler (90, 100) mindestens eine Schicht des elektrisch leitfähigen Nitridmaterials umfasst.

11. Vorrichtung nach Anspruch 10, wobei sich die mindestens eine Schicht am Boden des Nahfeldwandlers (90, 100) befindet.

12. Vorrichtung nach Anspruch 10, wobei der Nahfeldwandler (90, 100) eine Mehrschichtstruktur des elektrisch leitfähigen Nitrids und ein weiteres plasmonisches Nicht-Nitridmaterial umfasst.

13. Vorrichtung nach einem der Ansprüche 1 bis 6, wobei das elektrisch leitfähige Nitrid in dem gesamten Nahfeldwandler (90, 100) verteilt ist.

14. Vorrichtung nach Anspruch 13, wobei ein weiteres plasmonisches Nicht-Nitridmaterial ein Dotand in dem elektrisch leitfähigen Nitridmaterial ist.

15. Vorrichtung nach einem der vorangehenden Ansprüche, wobei der Nahfeldwandler (90, 100) TiN, ZrN, TaN, HfN oder Kombinationen davon und ein Nicht-Nitridmaterial, das unter Au, Ag, Cu oder Legierungen davon ausgewählt ist, umfasst.

16. Vorrichtung nach einem der vorangehenden Ansprüche, die des Weiteren Folgendes umfasst:
eine Energiequelle (78); und
einen Wellenleiter (42);
wobei die Energiequelle (78), der Wellenleiter (42) und der Nahfeldwandler (90, 100) dafür konfiguriert sind, Licht von der Energiequelle (78) zu dem Wellenleiter (42) und schließlich zu dem Nahfeldwandler (90, 100) zu übertragen.

17. Vorrichtung nach einem der Ansprüche 1 bis 15, wobei die Vorrichtung ein Festplattenlaufwerk (10) ist und des Weiteren Folgendes umfasst:
mindestens einen Aktuatorarm (48), der ein erstes Ende und ein zweites Ende aufweist; und
mindestens einen Kopf (22), wobei jeder Arm einen Kopf an seinem ersten Ende hat und wobei jeder Kopf Folgendes umfasst:
eine Energiequelle (78);
den Nahfeldwandler (90, 100);
eine Magnetlesevorrichtung; und
eine Magnetschreibvorrichtung (58),
wobei die Energiequelle (78) und der Nahfeldwandler (90, 100) dafür konfiguriert sind, Licht von der Energiequelle (78) zu dem Nahfeldwandler (90, 100) zu übertragen, um die Magnetschreibvorrichtung (58) beim Schreiben zu unterstützen.

## Revendications

1. Dispositif comprenant :
un transducteur de champ proche (90, 100), **caractérisé en ce qu'**une partie active plasmoniquement (510a, 510b) du transducteur de champ proche (90, 100) est constituée essentiellement d'un nitrure électriquement conducteur.

2. Dispositif selon la revendication 1, dans lequel le transducteur de champ proche (90, 100) comprend du TiN, ZrN, TaN, HfN ou des combinaisons de ces derniers.

3. Dispositif selon la revendication 1, dans lequel le transducteur de champ proche (90, 100) comprend le nitrure électriquement conducteur.

4. Dispositif selon la revendication 3, dans lequel le transducteur de champ proche (90, 100) est constitué essentiellement en totalité d'un nitrure électriquement conducteur.

5. Dispositif selon une quelconque des revendications précédentes, dans lequel la totalité du transducteur de champ proche (90, 100) est constituée essentiellement de TiN, ZrN, TaN, HfN ou des combinaisons de ces derniers.

6. Dispositif selon une quelconque des revendications précédentes, comprenant en outre une source d'énergie (78), la source d'énergie (78) produisant une énergie ayant une longueur d'onde de 300 nm à 2000 nm.

7. Dispositif selon la revendication 1 ou 2, dans lequel le transducteur de champ proche (90, 100) a une structure de cheville (96) et disque (94) et seule la cheville (96) comprend le nitrure électriquement conducteur.

8. Dispositif selon la revendication 7, dans lequel le disque (94) du transducteur de champ proche (90, 100) comprend de l'or.

9. Dispositif selon la revendication 1 ou 2, dans lequel seules des portions du transducteur de champ proche (500) comprennent le nitrure électriquement conducteur.

10. Dispositif selon la revendication 9, dans lequel le transducteur de champ proche (90, 100) comprend au moins une couche du matériau de nitrure électriquement conducteur.

11. Dispositif selon la revendication 10, dans lequel au moins une couche est sur la base du transducteur de champ proche (90, 100).

12. Dispositif selon la revendication 10, dans lequel le transducteur de champ proche (90, 100) comprend une structure multicouche du nitrure électriquement conducteur et d'un autre matériau non nitrure plasmonique.

13. Dispositif selon une quelconque des revendications 1 à 6, dans lequel le nitrure électriquement conducteur est dispersé au travers du transducteur de champ proche (90, 100).

14. Dispositif selon la revendication 13, dans lequel un autre matériau non nitrure, plasmonique est un dopant dans le matériau de nitrure électriquement conducteur.

15. Dispositif selon une quelconque des revendications précédentes, dans lequel le transducteur de champ proche (90, 100) comprend du TiN, ZrN, TaN, HfN ou des combinaisons de ces derniers ; et un matériau non nitrure sélectionné parmi Au, Ag, Cu ou des alliages de ces derniers.

16. Dispositif selon une quelconque des revendications précédentes comprenant en outre :
une source d'énergie (78) ; et
un guide d'onde (42) ;
dans lequel la source d'énergie (78), le guide d'onde (42) et le transducteur de champ proche (90, 100) sont configurés pour émettre de la lumière à partir de la source d'énergie (78) vers le guide d'onde (42) et finalement le transducteur de champ proche (90, 100).

17. Dispositif selon une quelconque des revendications 1 à 15, ledit dispositif étant un lecteur de disque (10) et comprenant en outre :
au moins un bras d'actionneur (48) ayant une première extrémité et une seconde extrémité ; et
au moins une tête (22), dans lequel chaque bras a une tête à la première extrémité de ce dernier et dans lequel chaque tête comprend :
une source d'énergie (78) ;
le transducteur de champ proche (90, 100) ;
un lecteur magnétique ; et
un dispositif d'écriture magnétique (58),
dans lequel la source d'énergie (78) et le transducteur de champ proche (90, 100) sont configurés pour émettre de la lumière de la source d'énergie (78) vers le transducteur de champ proche (90, 100) de manière à assister le dispositif d'écriture (58) lors de l'écriture.
